# EUROPÄISCHE PATENTSCHRIFT

(11) **EP 3 503 384 B1**
(45) Veröffentlichungstag und Bekanntmachung des Hinweises auf die Patenterteilung: **15.09.2021**
(21) Anmeldenummer: 17208906.2
(22) Anmeldetag: 20.12.2017
(51) Int. Cl.: H02S 30/20, H02S 40/34

(54) **ANSCHLUSSVORRICHTUNG, ELEKTRISCHES MODUL UND ANSCHLUSS-VERFAHREN**
CONNECTION DEVICE, ELECTRIC MODULE AND CONNECTION METHOD
DISPOSITIF DE RACCORDEMENT, MODULE ÉLECTRIQUE ET PROCÉDÉ DE RACCORDEMENT

(43) Veröffentlichungstag der Anmeldung: 26.06.2019
(73) Patentinhaber: Lapp Engineering AG, 6330 Cham (CH)
(72) Erfinder: DROTLEFF, Rolf, 75392 Deckenpfron (DE); SEGRT, Ivica, 75392 Deckenpfronn (DE)
(74) Vertreter: Rutz & Partner

(56) Entgegenhaltungen:
- EP-A2- 2 479 857
- WO-A1-2009/058231
- US-A1- 2012 033 392

## Beschreibung

Die Erfindung betrifft eine elektrische Anschlussvorrichtung, für den Anschluss eines flächigen elektrischen Moduls, das der Stromerzeugung dient, ein solches flächiges elektrisches Modul, das vorzugsweise organische Photovoltaikmodule aufweist, und ein Verfahren zum elektrischen Anschluss des flächigen elektrischen Moduls an ein Anschlusskabel.

Organische Photovoltaikmodule sind in der Regel sehr dünn und flexibel ausgestaltet. Die photovoltaisch aktive Schicht ist auf bzw. in einer zumindest teilweise flexiblen und folienartigen Schicht aufgebracht. Derartige flächige elektrische Module können aufgrund der Flexibilität in diversen Formen ausgeführt werden. Insbesondere sind auch nicht planare Formen möglich. Photovoltaische Installationen umfassen in der Regel eine Vielzahl an flächigen elektrischen Modulen, welche jeweils elektrisch angeschlossen werden müssen.

Bekannte Anschlussvorrichtungen sind für den Anschluss an dünne und flexible elektrische Module z.B. in der Ausgestaltung von Folien nur schlecht geeignet. Anschlussleitungen dieser Module müssen oft in einen Bereich ausserhalb der elektrischen Module geführt werden, um die Kontaktierung vorzunehmen. Dabei besteht die Gefahr, dass diese Anschlussleitungen oder auch die Folien der elektrischen Module während der Kontaktierung oder auch nach der Kontaktierung und der Installation der elektrischen Module beschädigt werden.

Aus der WO2009/058231A1 sind elektrische Randverbinder bekannt, die seitlich an Photovoltaikmodulen befestigt werden können.

Da flächige elektrische Module dieser Art, insbesondere Photovoltaikmodule, oft an gut sichtbaren Stellen im Aussenbereich montiert werden, resultiert ferner das Problem, dass installierte Anschlussvorrichtungen störend in Erscheinung treten.

Der vorliegenden Erfindung liegt somit die Aufgabe zugrunde, eine verbesserte Anschlussvorrichtung zu schaffen, mit welcher flächige elektrische Module, insbesondere organische Photovoltaikmodule, einfach kontaktiert bzw. an ein Anschlusskabel angeschlossen werden können.

Ferner ist ein verbessertes flächiges elektrisches Modul, insbesondere ein verbessertes konventionelles oder organisches Photovoltaikmodul, zu schaffen, welches mit einer solchen Anschlussvorrichtung versehen ist.

Zudem ist ein Verfahren anzugeben, mit dem erfindungsgemässe flächige elektrische Module einfach und schnell kontaktiert bzw. an ein Anschlusskabel angeschlossen werden können.

Die erfindungsgemässe Anschlussvorrichtung soll einfach und kompakt aufgebaut sein und daher ästhetisch nicht störend in Erscheinung treten.

Ferner soll die Anschlussvorrichtung die Flexibilität der flächigen elektrischen Module bzw. Photovoltaikmodule nicht wesentlich einschränken.

Weiterhin soll die Anschlussvorrichtung witterungsbeständig und wasserdicht sein.

Zudem soll die Vorrichtung einfach und schnell montierbar und für flächige elektrische Module geeignet sein, die unterschiedliche Dimensionen aufweisen.

Bei der Verbindung der Anschlussvorrichtung mit den elektrischen Modulen sollen hochwertige elektrische Verbindungen resultieren. Die Gefahr, dass bei der Verbindung der Anschlussvorrichtungen mit den elektrischen Modulen Beschädigungen resultieren, soll hingegen beseitigt werden.

Diese Aufgabe wird mit einer Anschlussvorrichtung gemäss Anspruch 1, einem flächigen elektrischen Modul gemäss Anspruch 11 sowie mit einem Verfahren gemäss Anspruch 13 gelöst. Vorteilhafte Ausgestaltungen der Erfindung sind in weiteren Ansprüchen angegeben.

Die Anschlussvorrichtung, die zum elektrischen Anschluss eines flächigen elektrischen Moduls, das der Stromerzeugung dient und das vorzugsweise eine Trägerfolie mit einer Photovoltaikschicht aufweist, an ein Anschlusskabel dient, umfasst
- eine erste Halbschale mit einem ersten Halteteil und wenigstens einem ersten Verriegelungselement,
- eine zweiten Halbschale mit einem zweiten Halteteil und wenigstens einem zweiten Verriegelungselement, das mit dem wenigstens einen ersten Verriegelungselement koppelbar ist, um die erste und zweite Halbschale miteinander zu verbinden,
- sowie wenigstens eine Dichtungsvorrichtung, mittels der die Verbindungsstelle zwischen den einander zugewandten Halteteilen dicht abschliessbar ist.

Erfindungsgemäss umfasst die Dichtungsvorrichtung eine erste Dichtung, die am ersten Halteteil anliegt, und eine zweite Dichtung, die am zweiten Halteteil anliegt. Die beiden Halbschalen sind anhand der ersten und zweiten Verriegelungselemente derart miteinander verbindbar, dass ein dazwischen gehaltenes Teil der Trägerfolie mit einer Seite an der ersten Dichtung anliegend und mit der anderen Seite an der zweiten Dichtung anliegend dicht einschliessbar ist, wobei innerhalb des durch die beiden miteinander verbundenen Halbschalen begrenzten Raumes eine Leiterverbindungseinheit gehalten ist, welche einerseits mit dem Anschlusskabel und andererseits mit einer Anschlussleitung des elektrischen Moduls verbunden oder verbindbar ist.

Die Leiterverbindungseinheit dient somit der Verbindung der von der Photovoltaikschicht herkommenden Anschlussleitung mit dem Anschlusskabel und ist zumindest annähernd innerhalb des durch die ersten Halbschale und die zweiten Halbschale begrenzten Raums dicht, vorzugsweise wasserdicht einschliessbar. Die Leiterverbindungseinheit ist durch die erste und zweite Halbschale und die erste und zweite Dichtung somit vor Witterungseinflüssen geschützt, was eine sichere und langlebige elektrische Verbindung gewährleistet.

Die photoelektrischen Eigenschaften von photovoltaischen Materialien, insbesondere von organischen photovoltaischen Materialien, werden oftmals negativ durch Feuchtigkeit und/oder Wasser beeinflusst. Um eine langandauernde und gleichbleibende elektrische Stromproduktion zu gewährleisten, müssen die photovoltaischen Materialien deshalb zuverlässig vor Feuchtigkeit und Wasser geschützt werden. Ein Eindringen von Feuchtigkeit und Wasser über die elektrische Anschlussstelle wird durch die erfindungsgemässe Anschlussvorrichtung vorteilhaft verhindert, womit die Lebensdauer des elektrischen Moduls verlängert wird.

Die erste und/oder die zweite Dichtung sind vorzugsweise ringförmig ausgebildet und in sich geschlossen. Die erste Dichtung ist in einer besonders bevorzugten Ausgestaltung zumindest teilweise innerhalb der ersten Halbschale oder eines daran vorgesehenen Halteteils angeordnet. Vorzugsweise ist auch die zweite Dichtung zumindest teilweise innerhalb der zweiten Halbschale oder eines daran vorgesehenen Halteteils angeordnet. Dies ermöglicht eine kompakte Bauform der Anschlussvorrichtung. Die Halteteile ersten und zweiten werden vorzugsweise durch die Ränder der Halbschalen gebildet. Es ist jedoch auch möglich, die Halteteil entfernt von den Rändern der Halbschalen separat auszubilden.

In bevorzugten Ausgestaltungen werden die Halteteile durch den nach aussen offenen Rand der Halbschalen gebildet. Vorzugsweise sind die Halteteile der Halbschalen ringförmig ausgebildet und liegen einander gegenüber. Im ersten und/oder zweiten Halteteil sind vorzugsweise ringförmig verlaufende Dichtungsnuten vorgesehen, in die die erste bzw. zweite Dichtung einsetzbar sind, wodurch ein ungewolltes Verschieben der Dichtungen während der Montage verhindert wird.

In einer bevorzugten Ausgestaltung ist an der ersten Halbschale und/oder an der zweiten Halbschale eine Kabeldurchgangsöffnung zur Durchführung des Anschlusskabels angeordnet. Über das Anschlusskabel wird der elektrische Strom vom elektrischen Modul zu einem Stromnetz geführt. In einer besonders bevorzugten Ausgestaltung erstreckt sich eine Öffnung zur Durchführung eines Anschlusskabels über die erste Halbschale und die zweite Halbschale. Grundsätzlich ist es auch möglich, wenigstens ein weiteres Anschlusskabel, wie ein Energiekabel oder ein Messkabel, in die Anschlussvorrichtung einzuführen.

An der ersten Dichtung und/oder an der zweiten Dichtung ist in einer besonders bevorzugten Ausgestaltung eine Kabeldurchführung zur Durchführung des Anschlusskabels angeordnet. Hierdurch wird ein Eindringen von Wasser oder Feuchtigkeit entlang des Kabelmantels verhindert.

An der Kabeldurchführung ist vorzugsweise ein Kabelkanal angeformt. Der Kabelkanal ist so ausgestaltet, dass er eng an einem durchgeführten Anschlusskabel anliegt, wodurch eine sichere Abdichtung der Kabeldurchführung gewährleistet ist.

Die zueinander korrespondierenden ersten und zweiten Verriegelungselemente sind in einer besonders bevorzugten Ausgestaltung als Schnappelemente oder Rastelemente oder Rastnasen oder Widerhaken oder Rastkanten ausgestaltet. Vorzugsweise sind die Verriegelungselemente werkzeugfrei verriegelbar. In einer weiteren bevorzugten Ausgestaltung sind die Verriegelungselemente zumindest teilweise aus magnetischen Materialien gefertigt oder umfassen magnetische Elemente.

In einer besonders bevorzugten Ausgestaltung ist an den Verriegelungselementen eine Schneidekante und/oder ein Schneidelement zur Durchtrennung der Trägerfolie angeordnet. Die Trägerfolie, welche die Photovoltaikschicht schützt und verkapselt, kann somit erst beim Ansetzen der Anschlussvorrichtung aufgetrennt werden, was einen maximalen Schutz der Photovoltaikschicht ermöglicht.

Die erste Dichtung und die zweite Dichtung sind vorzugsweise aus einem elastischen Material gefertigt. Dies ermöglicht eine gute Abdichtung zur Trägerfolie, zu den Halbschalen und zum Anschlusskabel. Besonders bevorzugt sind die Dichtungen aus einem Kautschukmaterial, Silikon, Gummi oder Mischungen hiervon gefertigt. Die erste und die zweite Halbschale sind vorzugsweise aus einem witterungsbeständigen Kunststoff oder aus Metall, wie Aluminium, oder einer Metalllegierung gefertigt. Sofern elastische Verriegelungselemente einstückig mit der ersten oder zweiten Halbschale 11, 12 verbunden sind, wird ein entsprechend elastisches Material für die erste und/oder zweite Halbschale 11, 12 gewählt.

Eine erfindungsgemässe Anschlussvorrichtung ist in Verbindung mit einem ebenfalls erfindungsgemässen flächigen elektrischen Modul verwendbar. Das elektrische Modul umfasst
- eine Trägerfolie, die vorzugsweise mit einer Photovoltaikschicht versehen ist,
- eine Anschlussleitung, welche den produzierten elektrischen Strom von der Trägerfolie, gegebenenfalls von der Photovoltaikschicht, wegführt,
- ein Anschlusskabel, welches zum Anschluss des elektrischen Moduls an ein Stromleitnetzwerk geeignet ist, und
- zumindest eine erfindungsgemässe Anschlussvorrichtung zur elektrischen Verbindung der Anschlussleitung mit dem Anschlusskabel.

In einer besonders bevorzugten Ausgestaltung sind an der Trägerfolie Anschlussöffnungen zur Durchführung der Verriegelungselemente der Anschlussvorrichtung vorgesehen. Hierdurch ist die Anschlussvorrichtung einfach und schnell positionierbar.

In einer weiteren bevorzugten Ausgestaltung ist am elektrischen Modul eine zweite erfindungsgemässe Anschlussvorrichtung vorgesehen, zum elektrischen Anschluss einer zweiten Anschlussleitung des elektrischen Moduls.

Durch die erfindungsgemässe Anschlussvorrichtung ist ein elektrisches Modul mittels eines erfindungsgemässen Verfahrens besonders vorteilhaft an ein Anschlusskabel anschliessbar. In bevorzugten Ausgestaltungen kann die Installation der Anschlussvorrichtung manuell durchgeführt werden, sodass auf Werkzeuge verzichtet werden kann.

Bei Durchführung des erfindungsgemässen Verfahrens
a) wird das Anschlusskabel vorzugsweise durch die Kabeldurchführung in der ersten Dichtung in die Anschlussvorrichtung oder die erste oder zweite Halbschale eingeführt,
b) wird das Anschlusskabel mit der Leiterverbindungseinheit elektrisch leitend verbunden,
c) wird die Anschlussleitung elektrisch leitend mit der Leiterverbindungseinheit verbunden,
d) werden die erste Dichtung und die zweite Dichtung im zugehörigen ersten oder zweiten Halteteil, vorzugsweise je in einer dafür vorgesehenen Dichtungsnut, angeordnet, und
e) wird die erste Halbschale mittels Verriegelungselementen mit der zweiten Halbschale verbunden.

In einer besonders bevorzugten Ausgestaltung des Verfahrens sind vorzugsweise zumindest die Verfahrensschritte d) und e), bevorzugt das ganze Verfahren, ohne Hilfsmittel und/oder Werkzeuge durchführbar.

Vorzugsweise wird das Verfahren zumindest teilweise durch eine Maschine oder einen Roboter ausgeführt.

Nachfolgend wird die Erfindung anhand von Zeichnungen näher erläutert. Dabei zeigt:
- Fig. 1a: ein erfindungsgemässes flächiges elektrisches Modul 9 mit einer erfindungsgemässen Anschlussvorrichtung 1;
- Fig. 1b: das elektrische Modul 9 und die Anschlussvorrichtung 1 von Fig. 1a von der anderen Seite;
- Fig. 2a: die Anschlussvorrichtung 1 von Fig. 1 in einer Explosionsdarstellung;
- Fig. 2b: die Anschlussvorrichtung 1 aus Fig. 2a in einer partiellen Explosionsdarstellung;
- Fig. 3: einen Schnitt durch die Anschlussvorrichtung 1 entlang der in Fig. 2a gezeigten Schnittlinie A--A; und
- Fig. 4: einen Schnitt durch das elektrische Modul 9 und die mit der Trägerfolie 3 verbundene Anschlussvorrichtung 1 entlang der in Fig. 1a gezeigten Schnittlinie B--B.

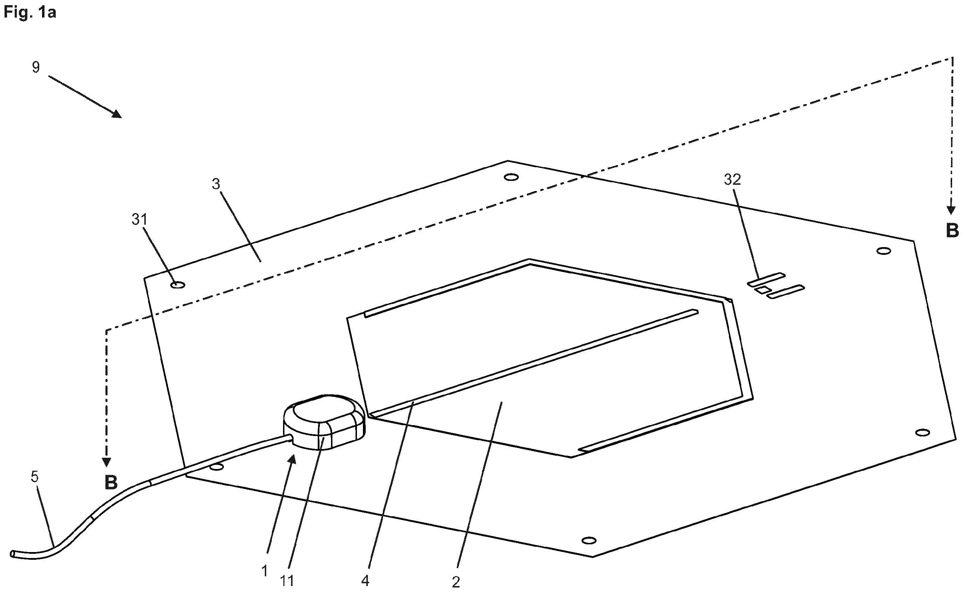

Fig. 1a zeigt ein erfindungsgemässes elektrisches Modul 9. Das flächig ausgestaltete elektrische Modul 9 umfasst eine Trägerfolie 3, auf oder in welcher eine Photovoltaikschicht 2 angebracht ist. An der Trägerfolie 3 sind vorzugsweise peripher Befestigungsstellen 31 angeordnet, an welchen das elektrische Modul 9 befestigbar ist und aufgespannt werden kann. An der Trägerfolie 3 sind vorzugsweise Anschlussöffnungen 32 angeordnet, zur Durchführung von Verriegelungselementen der gezeigten Anschlussvorrichtung 1. Über eine Anschlussleitung 4 wird der in der Photovoltaikschicht 2 produzierte Strom zur Anschlussvorrichtung 1 abgeleitet, von der hier nur eine erste Halbschale 11 sichtbar ist. Aus der Halbschale 11 ist ein Anschlusskabel 5 heraus geführt, von dem der Strom in Richtung eines Stromnetzwerks leitbar ist.

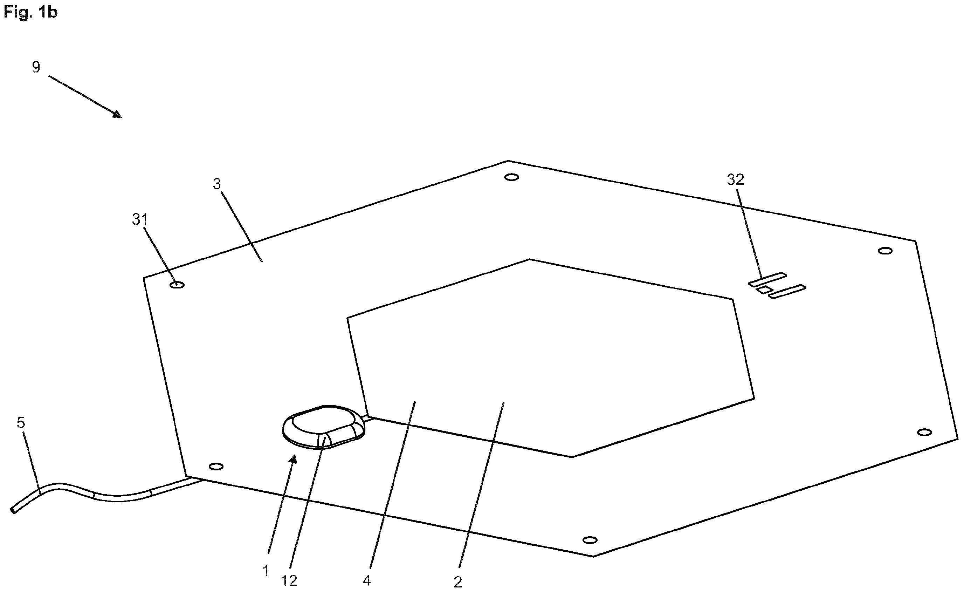

Fig. 1b zeigt das elektrische Modul 9 und die Anschlussvorrichtung 1 von Fig. 1a in einer rückseitigen Ansicht. Gezeigt ist nun eine zweite Halbschale 12 der Anschlussvorrichtung 1, die ist mit der ersten Halbschale 11 aus Fig. 1a verbunden ist.

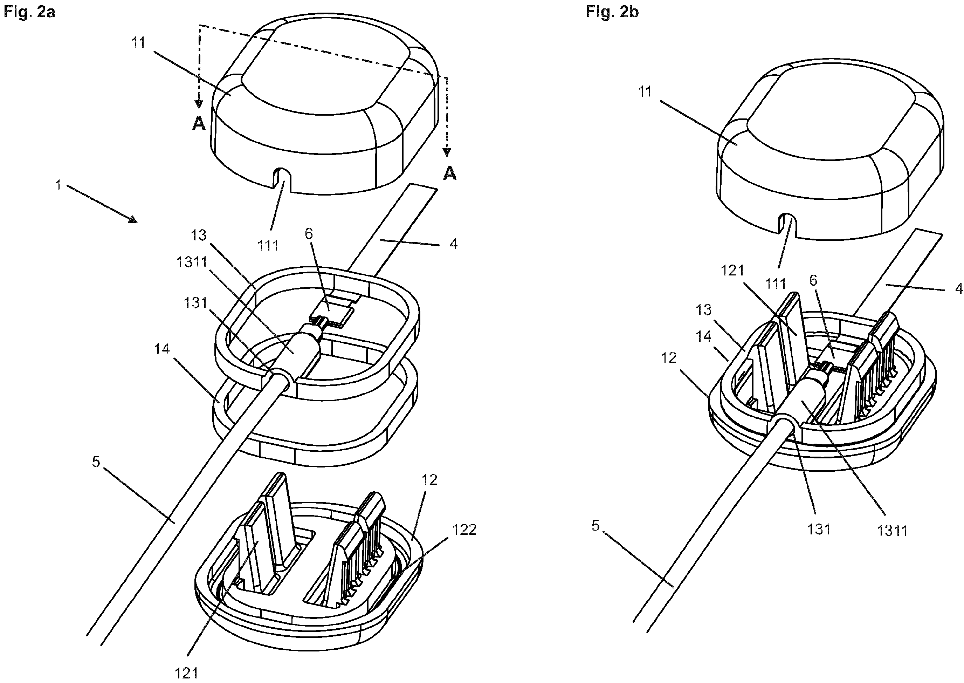

Fig. 2a zeigt in einer Explosionsdarstellung eine erfindungsgemässe Anschlussvorrichtung 1 mit zwei vertikal gegeneinander verschobenen erste und zweiten Halbschalen 11 und 12, zwischen denen zwei ebenfalls vertikal gegeneinander verschobene erste und zweite Dichtungen 13, 14 gezeigt sind, die ringförmig ausgebildet und parallel zueinander ausgerichtet sind und die vorzugsweise zumindest annähernd gleiche Abmessungen und zueinander korrespondierende Auflageflächen aufweisen. Innerhalb der Anschlussvorrichtung 1, ist eine Leiterverbindungseinheit 6, gegebenenfalls von der ersten und/oder der zweiten Dichtung 13, 14, gehalten, die einerseits mit einer Anschlussleitung 4 des flächigen elektrischen Modus 9 von Fig. 1a und andererseits mit einem Anschlusskabel 5 elektrisch leitend verbunden ist.

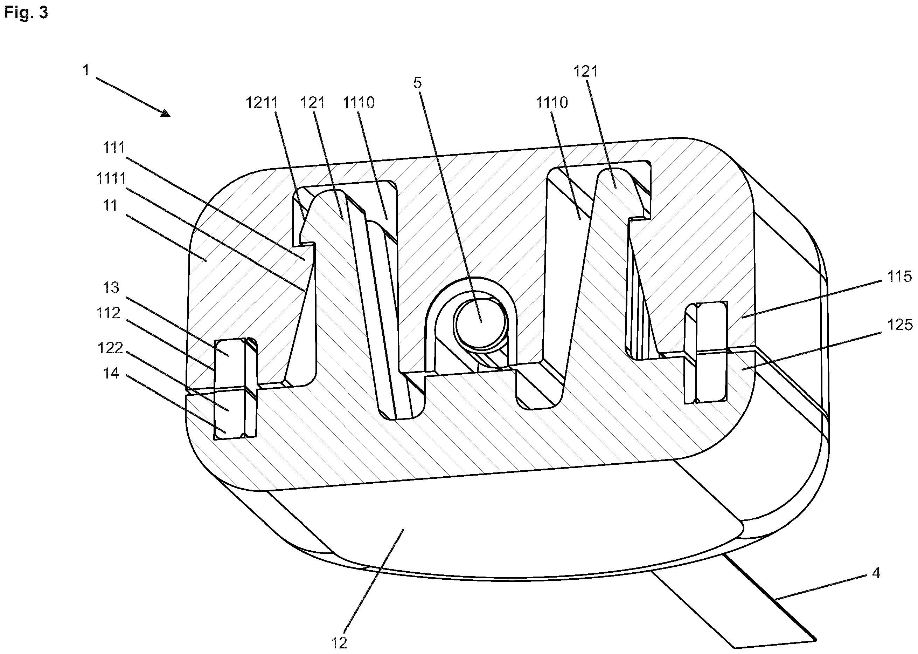

An der ersten Halbschale 11 ist eine Kabeldurchgangsöffnung 110 angeordnet, durch die das Anschlusskabel 5 ins Innere der Anschlussvorrichtung 1 einführbar ist. Gegenüber der ersten Halbschale 11 liegt die gegensätzlich orientierte zweite Halbschale 12. Die erste Halbschale 11 und die zweite Halbschale 12 bilden das Gehäuse der Anschlussvorrichtung 1 und schützen die darin gehaltenen Teile vor Witterungseinflüssen. Die erste Halbschale 11 und die zweite Halbschale 12 sind durch erste und zweite Verriegelungselemente 111, 121 miteinander verbindbar (siehe Fig. 3).

In dieser vorzugsweisen Ausgestaltung verlaufen entlang dem Rand der ersten Halbschale 11 und entlang dem Rand der zweiten Halbschale 12 ringförmige erste und zweite Dichtungsnuten 112, 122, in denen die erste bzw. zweite Dichtung 13; 14 lagerbar sind (siehe auch Fig. 3). Die gegeneinander gerichteten Ränder der ersten und zweiten Halbschale 11, 12 bilden daher Halteteile 112, 122, die dem Halten, vorzugsweise der Aufnahme der ersten und zweiten Dichtung 13, 14 dienen. Nach dem Einsetzen der Dichtungen 13, 14 in die Dichtungsnuten 112, 122 sind diese vorzugsweise formschlüssig und/oder kraftschlüssig von den Halbschalen 11, 12 gehalten. Vorzugsweise sind die Dichtungen 13, 14 aus einem elastischen Material und mit einem Querschnitt gefertigt, der etwas grösser ist als der Querschnitt der Dichtungsnuten 112, 122, sodass nach dem Einsetzen der Dichtungen 13, 14 in die Dichtungsnuten 112, 122 eine kraftschlüssige Verbindung resultiert. Gleichzeitig ragt zumindest eine der Dichtungen 13, 14 derart aus der zugehörigen Dichtungsnut 112, 122 hervor, dass die Dichtungen 13, 14 beim Zusammensetzen der beiden Halbschalen 11, 12 aneinander liegen und vorzugsweise komprimiert werden. Sofern eine der Dichtungen 13 oder 14 nicht aus der zugehörigen Dichtungsnut 112 oder 122 heraus ragt, so wird die gehaltene Trägerfolie 3 durch die andere Dichtung 14 oder 13 in die entsprechende Dichtungsnut 112 oder 122 hinein verschoben und dadurch fixiert. Die Dichtungen 13, 14 können jedoch auch um ein gleiches oder ungleiches Mass aus der zugehörigen Dichtungsnut 112 oder 122 heraus ragen.

In dieser vorzugsweisen Ausgestaltung ist an der ersten Dichtung 13 eine Kabeldurchführung 131 zur Durchführung des Anschlusskabels 5 angeordnet. An der Kabeldurchführung 131 ist ein Kabelkanal 1311 angeformt, welcher den Mantel des Anschlusskabels 5 vorzugsweise dichtend umschliesst.

Fig. 2b zeigt die Anschlussvorrichtung 1 aus Fig. 2a in einer partiellen Explosionsdarstellung. Die zweite Dichtung 14 ist nicht sichtbar in der Dichtungsnut 122 gelagert. Die erste Dichtung 13 mit dem durchgeführten Anschlusskabel 5 ist komplanar zur zweiten Dichtung 14 angeordnet. Die Leiterverbindungseinheit 6 liegt im Inneren der zweiten Halbschale 12 und wird nach Aufsetzen der ersten Halbschale 11 komplett vor Witterungseinflüssen geschützt.

Fig. 3 zeigt einen Schnitt durch die Anschlussvorrichtung 1 entlang der in Fig. 2a gezeigten Schnittlinie A-A. Die erste und die zweite Halbschale 11, 12 liegen aneinander und sind durch die Verriegelungselemente 111, 121 miteinander gekoppelt. In der gezeigten Ausgestaltung sind die zweiten Verriegelungselemente 121 paarweise als Haken an der zweiten Halbschale 12 angeformt und nach aussen geneigt. Die hakenförmigen zweiten Verriegelungselemente 121 ragen je in einen Kopplungskanal 1110 hinein und sind mit den Haken in eine Rastkante 111 eingehängt. Die zweiten Verriegelungselemente 121 weisen auf der Aussenseite der Haken geneigte Flanken 1211 auf, die beim Verbinden der beiden Halbschalen 11, 12 entlang einer geneigten Wand 1111 des zugehörigen Kopplungskanals 1110 gleiten. Bei diesem Vorgang werden die zweiten Verriegelungselemente 121 gegeneinander gedrückt, sodass sie bei Erreichen der Rastkanten 111 zurück federn und in die Rastkanten 111 einrasten können. Die zweiten Verriegelungselemente 121 werden daher vorzugsweise aus einem federelastischen Material gefertigt.

Zum Lösen der Verbindung kann z.B. vorgesehen werden, dass die Halbschalen 11, 12 entlang der Längsachse bzw. Achse des Anschlusskabels 5 gegeneinander verschoben werden, sodass der Eingriff zwischen den Verriegelungselementen 111, 121 aufgehoben wird. Diese seitliche Verschiebung kann nach der Installation z.B. durch ein Arretierungselement unterbunden werden.

Fig. 3 zeigt ferner, dass die in den Dichtungsnuten 112, 122 gehaltenen Dichtungen 13, 14 aneinander liegen und die dazwischen liegende Trägerfolie 3 (hier nicht gezeigt) festklemmen können.

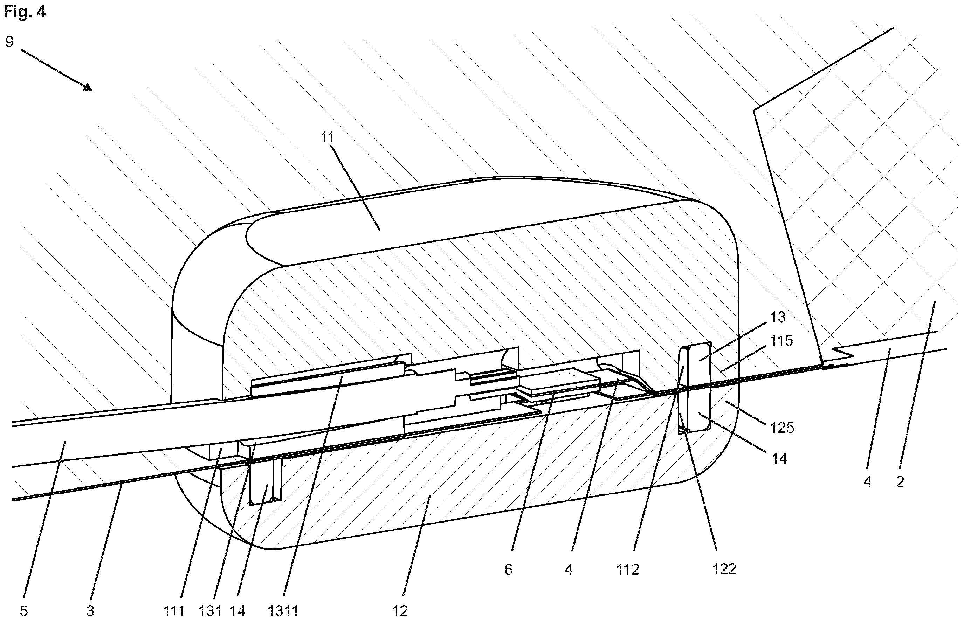

Fig. 4 zeigt einen Schnitt durch das elektrische Modul 9 und die mit der Trägerfolie 3 verbundene Anschlussvorrichtung 1 entlang der in Fig. 1a gezeigten Schnittlinie B--B. Die in der ersten Dichtungsnut 112 gelagerte erste Dichtung 13 und die in der zweiten Dichtungsnut 122 gelagerte zweite Dichtung 14 liegen auf gegenüberliegenden Seiten eng, vorzugsweise dicht abschliessend an der Trägerfolie 3 an. Das Anschlusskabel 5 ist durch eine Kabeldurchführung 131 in der ersten Dichtung 13 ins Innere der Anschlussvorrichtung 1 geführt. Der an die Kabeldurchführung 131 angeformte Kabelkanal 1311 liegt eng und dichtend am Mantel des Anschlusskabels 5 an. Das Anschlusskabel 5 ist über eine Leiterverbindungseinheit 6 elektrisch leitend mit der Anschlussleitung 4 verbunden. Die Anschlussleitung 4 leitet den in der Photovoltaikschicht 2 produzierten Strom von dieser weg zur Anschlussvorrichtung 1. Die Anschlussleitung 4 ist vorzugsweise als Flachbandleiter ausgestaltet, was eine einfach Einführung in die Anschlussvorrichtung 1 ermöglicht. Bei einer Ausgestaltung der Anschlussleitung 4 als Anschlusskabel oder Rundleiter wird die Anschlussleitung 4 analog zum Anschlusskabel 5 in die Anschlussvorrichtung 1 eingeführt.

Die miteinander verbundenen Halbschalen 11, 12, die das Gehäuse der Anschlussvorrichtung 1 bilden, sind abgerundet, weshalb die Anschlussvorrichtung 1 ein vorteilhaftes Erscheinungsbild aufweist und gleichzeitig abweisend gegenüber Fremdobjekten wirkt, die daran nicht einhängen und keine Kraft auf die Anschlussvorrichtung 1 ausüben können.

### Bezugszeichenliste

- 1: Anschlussvorrichtung
- 11: erste Halbschale
- 110: Kabeldurchgangsöffnung
- 111: erste Verriegelungselemente
- 1110: Kopplungskanal
- 1111: geneigte Wand
- 112: erste Dichtungsnut
- 115: erstes Halteteil
- 12: zweite Halbschale
- 121: zweite Verriegelungselemente
- 1211: geneigte Flanke
- 122: zweite Dichtungsnut
- 125: zweites Halteteil
- 13: erste Dichtung
- 131: Kabeldurchführung
- 1311: Kabelkanal
- 14: zweite Dichtung
- 2: Photovoltaikschicht
- 3: Trägerfolie
- 31: Befestigungsstellen
- 32: Anschlussöffnungen
- 4: Anschlussleitung
- 5: Anschlusskabel
- 6: Leiterverbindungseinheit
- 9: elektrisches Modul, vorzugsweise Photovoltaikelement

## Patentansprüche

1. Anschlussvorrichtung (1) zum elektrischen Anschluss eines flächigen elektrischen Moduls (9), das der Stromerzeugung dient und das vorzugsweise eine Trägerfolie (3) mit einer Photovoltaikschicht (2) umfasst, an ein Anschlusskabel (5) ,
- mit einer ersten Halbschale (11) mit einem ersten Halteteil (115) und wenigstens einem ersten Verriegelungselement (111),
- mit einer zweiten Halbschale (12) mit einem zweiten Halteteil (215) und wenigstens einem zweiten Verriegelungselement (121), das mit dem wenigstens einen ersten Verriegelungselement (111) koppelbar ist, um die erste und zweite Halbschale (11; 12) miteinander zu verbinden, und
- mit wenigstens einer Dichtungsvorrichtung, mittels der die Verbindungsstelle zwischen den einander zugewandten Halteteilen (115, 125) dicht abschliessbar ist, **dadurch gekennzeichnet,**
**dass** die Dichtungsvorrichtung eine erste Dichtung (13), die am ersten Halteteil (115) anliegt, sowie eine zweite Dichtung (14) umfasst, die am zweiten Halteteil (125) anliegt,
**dass** die erste Halbschale (11) und die zweite Halbschale (12) anhand der ersten und zweiten Verriegelungselemente (111, 121) derart miteinander verbindbar sind, dass ein dazwischen gehaltenes Teil der Trägerfolie (3) mit einer Seite an der ersten Dichtung (13) anliegend und mit der anderen Seite an der zweiten Dichtung (14) anliegend dicht einschliessbar ist und dass innerhalb des durch die beiden miteinander verbundenen Halbschalen (11, 12) begrenzten Raumes eine Leiterverbindungseinheit (6) gehalten ist, welche einerseits mit dem Anschlusskabel (5) und andererseits mit einer Anschlussleitung (4) des elektrischen Moduls (9) verbunden oder verbindbar ist.

2. Anschlussvorrichtung (1) nach Anspruch 1, **dadurch gekennzeichnet,**
- **dass** die vorzugsweise ringförmige erste Dichtung (13) zumindest teilweise innerhalb des vorzugsweise ringförmig verlaufenden ersten Halteteils (115) angeordnet ist, und/oder
- **dass** die vorzugsweise ringförmige zweite Dichtung (14) zumindest teilweise innerhalb des vorzugsweise ringförmig verlaufenden zweiten Halteteils (125) angeordnet ist.

3. Anschlussvorrichtung (1) nach Anspruch 1 oder 2, **dadurch gekennzeichnet, dass** an der ersten Halbschale (11) und/oder an der zweiten Halbschale (12) eine Kabeldurchgangsöffnung (110) zur Durchführung des Anschlusskabels (5) angeordnet ist und/oder dass eine sich über die erste Halbschale (11) und die zweite Halbschale (12) erstreckende Öffnung zur Durchführung des Anschlusskabels (5) vorgesehen ist.

4. Anschlussvorrichtung (1) nach Anspruch 1, 2 oder 3, **dadurch gekennzeichnet, dass** an der ersten Dichtung (13) und/oder an der zweiten Dichtung (14) eine Kabeldurchführung (131) zur Durchführung des Anschlusskabels (5) angeordnet ist.

5. Anschlussvorrichtung (1) nach Anspruch 4, **dadurch gekennzeichnet, dass** an die Kabeldurchführung (131) ein Kabelkanal (1311) angeformt ist.

6. Anschlussvorrichtung (1) nach einem der Ansprüche 1 - 5, **dadurch gekennzeichnet, dass** die Leiterverbindungseinheit (6) durch die erste und zweite Halbschale (11, 12) und die erste und zweite Dichtung (13, 14) dicht umschlossen und dadurch vor Witterungseinflüssen geschützt ist.

7. Anschlussvorrichtung (1) nach einem der Ansprüche 1 - 6, **dadurch gekennzeichnet, dass** das ersten Halteteil (115) eine erste Dichtungsnut (112) zur Aufnahme der ersten Dichtung (13) und/oder dass das zweite Halteteil (125) eine zweite Dichtungsnut (122) zur Aufnahme der zweiten Dichtung (14) aufweist.

8. Anschlussvorrichtung (1) nach einem der Ansprüche 1 - 7, **dadurch gekennzeichnet, dass** die ersten und zweiten Verriegelungselemente (111, 121) als zueinander korrespondierende Schnappelemente oder Rastnasen oder Widerhaken ausgestaltet sind und/oder dass die ersten und zweiten Verriegelungselemente (111, 121) zumindest teilweise aus magnetischen Materialien gefertigt sind.

9. Anschlussvorrichtung (1) nach einem der Ansprüche 1 - 8, **dadurch gekennzeichnet, dass** an den ersten oder zweiten Verriegelungselementen (121) eine Schneidekante und/oder ein Schneidelement, zur Durchtrennung der Trägerfolie (3), angeordnet ist.

10. Anschlussvorrichtung (1) nach einem der Ansprüche 1 - 9, **dadurch gekennzeichnet, dass** die erste Dichtung (13) und/oder die zweite Dichtung (14) aus einem elastischen Material, vorzugsweise einem Kautschukmaterial, Silikon, Gummi oder Mischungen hiervon, gefertigt ist und/oder dass die erste Halbschale (11) und/oder die zweite Halbschale (12) aus einem witterungsbeständigen Kunststoff oder Metall, wie Aluminium oder einer Metalllegierung gefertigt ist.

11. Elektrisches Modul (9), das der Stromerzeugung dient, mit
- einer Trägerfolie (3), die zur Erzeugung eines elektrischen Stroms vorzugsweise mit einer Photovoltaikschicht (2) versehen ist,
- einer Anschlussleitung (4), mittels der der erzeugte elektrische Strom von der Trägerfolie (3), gegebenenfalls von der Photovoltaikschicht (2), weg führbar ist,
- einem Anschlusskabel (5), welches zum Anschluss des elektrischen Moduls (9) an ein Stromleitnetzwerk geeignet ist, und
- zumindest einer Anschlussvorrichtung (1) nach einem der Ansprüche 1 bis 10 zur elektrischen Verbindung der Anschlussleitung (4) mit dem Anschlusskabel (5).

12. Elektrisches Modul (9) nach Anspruch 11, **dadurch gekennzeichnet, dass** an der Trägerfolie (3) Anschlussöffnungen (32) zur Durchführung der ersten und/oder zweiten Verriegelungselemente (111, 121) der Anschlussvorrichtung (1) vorgesehen sind und/oder dass am elektrischen Modul (9) eine zweite Anschlussvorrichtung (1) nach einem der Ansprüche 1-10 zum elektrischen Anschluss der zweiten Elektrode des elektrischen Moduls (9) vorgesehen ist.

13. Verfahren zum elektrischen Anschluss eines elektrischen Moduls (9) gemäss Anspruch 11 mittels einer Anschlussvorrichtung (1) nach einem der Ansprüche 1 bis 10 an ein Anschlusskabel (5), wobei
a) das Anschlusskabel (5) vorzugsweise durch eine Kabeldurchführung (131) in der ersten Dichtung (13) hindurch und in die Anschlussvorrichtung (1) oder eine der Halbschalen (11, 12) eingeführt wird,
b) das Anschlusskabel (5) mit der Leiterverbindungseinheit (6) elektrisch leitend verbunden wird,
c) die Anschlussleitung (4) elektrisch leitend mit der Leiterverbindungseinheit (6) verbunden wird,
d) die erste Dichtung (13) und die zweite Dichtung (14) im zugehörigen ersten oder zweiten Halteteil (115; 125), vorzugsweise je in einer dafür vorgesehenen Dichtungsnut (112; 122), angeordnet werden,
e) die erste Halbschale (11) mittels den ersten und zweiten Verriegelungselementen (111, 121) so mit der zweiten Halbschale (12) verbunden wird, dass ein dazwischen gehaltenes Teil der Trägerfolie (3) mit einer Seite an der ersten Dichtung (13) anliegend und mit der anderen Seite an der zweiten Dichtung (14) anliegend dicht eingeschlossen wird.

14. Verfahren nach Anspruch 13, **dadurch gekennzeichnet, dass** das Verfahren, vorzugsweise zumindest die Verfahrensschritte (d) und (e), ohne Hilfsmittel und/oder Werkzeuge durchführbar ist.

15. Verfahren nach Anspruch 13 oder 14, **dadurch gekennzeichnet, dass** das Verfahren zumindest teilweise durch eine Maschine oder einen Roboter ausgeführt wird.

## Claims

1. Connection device (1) for the electrical connection of a flat electrical module (9), which is used to generate electricity and which preferably comprises a carrier film (3) with a photovoltaic layer (2), to a connection cable (5) ,
- with a first half-shell (11) with a first holding part (115) and at least one first locking element (111),
- with a second half-shell (12) with a second holding part (215) and at least one second locking element (121) which can be coupled to the at least one first locking element (111) in order to close the first and second half-shells (11; 12) together connect, and
- with at least one sealing device by means of which the connection point between the mutually facing holding parts (115, 125) can be tightly sealed, **characterized in that,**
that the sealing device comprises a first seal (13), which rests on the first holding part (115), and a second seal (14), which rests on the second holding part (125),
that the first half-shell (11) and the second half-shell (12) can be connected to one another by means of the first and second locking elements (111, 121) in such a way that a part of the carrier film (3) held therebetween lies against the first seal (13) with one side and against the second seal (14) with the other side. can be tightly enclosed and that within the space delimited by the two interconnected half-shells (11, 12) a conductor connection unit (6) is held, which is connected on the one hand to the connection cable (5) and on the other hand to a connection line (4) of the electrical module (9) is connected or connectable.

2. Connection device (1) according to Claim 1, **characterized in that**
- the preferably ring-shaped first seal (13) is arranged at least partially within the preferably ring-shaped first holding part (115), and / or
- the preferably ring-shaped second seal (14) is arranged at least partially within the preferably ring-shaped second holding part (125).

3. Connection device (1) according to claim 1 or 2, **characterized in that** a cable passage opening (110) for leading the connection cable (5) through is arranged on the first half-shell (11) and / or on the second half-shell (12) and / or that a is provided over the first half-shell (11) and the second half-shell (12) extending opening for the passage of the connecting cable (5).

4. Connection device (1) according to claim 1, 2 or 3, **characterized in that** a cable bushing (131) for feeding the connection cable (5) through is arranged on the first seal (13) and / or on the second seal (14).

5. Connection device (1) according to claim 4, **characterized in that** a cable duct (1311) is molded onto the cable bushing (131).

6. Connection device (1) according to one of claims 1 to 5, **characterized in that** the conductor connection unit (6) is tightly enclosed by the first and second half-shells (11, 12) and the first and second seals (13, 14) and thereby protected from the weather is.

7. Connection device (1) according to one of claims 1 to 6, **characterized in that** the first holding part (115) has a first sealing groove (112) for receiving the first seal (13) and / or that the second holding part (125) has a second sealing groove (122) for receiving the second seal (14) .

8. Connecting device (1) according to one of claims 1 to 7, **characterized in that** the first and second locking elements (111, 121) are designed as snap-in elements or latching noses or barbs that correspond to one another and / or that the first and second locking elements (111, 121) are at least partially made of magnetic materials.

9. Connection device (1) according to one of Claims 1 to 8, **characterized in that** a cutting edge and / or a cutting element for severing the carrier film (3) is arranged on the first or second locking elements (121).

10. Connection device (1) according to one of claims 1 to 9, **characterized in that** the first seal (13) and / or the second seal (14) is made of an elastic material, preferably a rubber material, silicone, rubber or mixtures thereof, and / or that the first half-shell (11) and / or the second half-shell (12) is made of a weather-resistant plastic or metal, such as aluminum or a metal alloy.

11. Electrical module (9), which is used to generate electricity, with
- a carrier film (3) which is preferably provided with a photovoltaic layer (2) to generate an electrical current,
- a connection line (4) by means of which the generated electrical current can be routed away from the carrier film (3), possibly from the photovoltaic layer (2),
- a connection cable (5) which is suitable for connecting the electrical module (9) to a power supply network, and
- at least one connection device (1) according to one of claims 1 to 10 for the electrical connection of the connection line (4) to the connection cable (5).

12. Electrical module (9) according to claim 11, **characterized in that** connection openings (32) for the implementation of the first and / or second locking elements (111, 121) of the connection device (1) are provided on the carrier film (3) and / or that the electrical Module (9) a second connection device (1) according to one of claims 1-10 is provided for the electrical connection of the second electrode of the electrical module (9).

13. Method for the electrical connection of an electrical module (9) according to claim 11 by means of a connection device (1) according to one of claims 1 to 10 to a connection cable (5), wherein
a) the connection cable (5) is preferably inserted through a cable bushing (131) in the first seal (13) and into the connection device (1) or one of the half-shells (11, 12),
b) the connection cable (5) is connected to the conductor connection unit (6) in an electrically conductive manner,
c) the connection line (4) is connected to the conductor connection unit (6) in an electrically conductive manner,
d) the first seal (13) and the second seal (14) are arranged in the associated first or second holding part (115; 125), preferably each in a sealing groove (112; 122) provided for this purpose,
e) the first half-shell (11) is connected to the second half-shell (12) by means of the first and second locking elements (111, 121) such that the carrier foil (3) being held tightly between is pressed against the first gasket (13) on one side and against the second gasket (14) on the other side.

14. Method according to claim 13, **characterized in that** the method, preferably at least method steps (d) and (e), can be carried out without aids and / or tools.

15. Method according to Claim 13 or 14, **characterized in that** the method is carried out at least partially by a machine or a robot.

## Revendications

1. Dispositif de connexion (1) pour la connexion électrique d'un module électrique plat (9), qui est utilisé pour produire de l'électricité et qui comprend de préférence un film porteur (3) avec une couche photovoltaïque (2), à un câble de connexion (5),
- avec une première demi-coque (11) avec une première partie de maintien (115) et au moins un premier élément de verrouillage (111),
- avec une deuxième demi-coque (12) avec une deuxième pièce de maintien (215) et au moins un deuxième élément de verrouillage (121) qui peut être couplé au au moins un premier élément de verrouillage (111) afin de fermer le premier et deuxième demi-coquilles (11, 12) ensemble de connexion, et
- avec au moins un dispositif d'étanchéité au moyen duquel le point de raccordement entre les parties de maintien (115, 125) en vis-à-vis peut être étanche, **caractérisé en ce que**
que le dispositif d'étanchéité comprend un premier joint (13), qui repose sur la première partie de maintien (115), et un deuxième joint (14), qui repose sur la deuxième partie de maintien (125),
que la première demi-coque (11) et la deuxième demi-coque (12) peut être relié à l'autre au moyen des premier et second éléments de verrouillage (111, 121) de telle manière qu'une partie du film de support (3) maintenu entre ceux - ci se situe sur la première joint d' étanchéité (13) avec un côté et contre la seconde garniture d' étanchéité (14) avec l'autre côté. peut être hermétiquement fermé et que , dans l'espace délimité par les deux demi-coquilles reliées entre elles (11, 12) une unité de connexion de conducteur (6) est tenue, qui est relié d'une part au câble de connexion (5) et d'autre part à une ligne de connexion (4) du module électrique (9) est relié ou peut être relié.

2. Dispositif de connexion (1) selon la revendication 1, **caractérisé en ce que**
- le premier joint de préférence annulaire (13) est disposé au moins partiellement à l'intérieur de la première pièce de maintien de préférence annulaire (115), et/ou
- le second joint de préférence annulaire (14) est disposé au moins partiellement à l'intérieur de la seconde pièce de maintien de préférence annulaire (125) .

3. Dispositif de connexion (1) selon la revendication 1 ou 2, **caractérisé en ce qu'**une ouverture de passage de câble (110) pour le passage du câble de raccordement (5) est ménagée sur la première demi-coque (11) et/ou sur la seconde moitié- coque (12) et / ou que il est prévu sur la première demi-coque (11) et la deuxième demi-coque (12) se prolongeant ouverture pour le passage du câble de raccordement (5).

4. Dispositif de connexion (1) selon l'une des revendications 1, 2 ou 3, **caractérisé en ce qu'**un passe-câble (131) pour le passage du câble de raccordement (5) est disposé sur le premier joint (13) et/ou sur le deuxième joint (14).

5. Dispositif de connexion (1) selon la revendication 4, **caractérisé en ce qu'**une goulotte de câbles (1311) est surmoulée sur le passe-câbles (131).

6. Dispositif de connexion (1) selon l'une des revendications 1 à 5, **caractérisé en ce que** l'unité de connexion de conducteurs (6) est enserrée de manière étanche par les première et deuxième demi-coques (11, 12) et les premier et deuxième joints (13, 14) et est ainsi protégé contre le vieillissement.

7. Dispositif de connexion (1) selon l'une des revendications 1 à 6, **caractérisé en ce que** la première pièce de maintien (115) présente une première rainure d'étanchéité (112) pour recevoir le premier joint (13) et/ou que la deuxième pièce de maintien (125) présente une deuxième rainure d'étanchéité (122) pour recevoir le second joint d' étanchéité (14).

8. Dispositif de connexion (1) selon l'une des revendications 1 à 7, **caractérisé en ce que** les premier et deuxième éléments de verrouillage (111, 121) sont réalisés sous la forme d'éléments encliquetables ou d'ergots ou d'ardillons d'encliquetage qui se correspondent et/ou que le des premier et second éléments de verrouillage (111, 121) sont au moins partiellement en des matériaux magnétiques.

9. Dispositif de connexion (1) selon l'une des revendications 1 à 8, **caractérisé en ce qu'**une arête coupante et/ou un élément coupant pour séparer le film support (3) est disposé sur le premier ou le deuxième élément de verrouillage (121).

10. Dispositif de connexion (1) selon l'une des revendications 1 à 9, **caractérisé en ce que** le premier joint (13) et/ou le deuxième joint (14) est réalisé en un matériau élastique, de préférence un matériau caoutchouteux, silicone, caoutchouc ou leurs mélanges et / ou que la première demi-coque (11) et / ou la deuxième demi-coque (12) est faite d'une matière plastique résistant aux intempéries ou en métal, tel que l'aluminium ou un alliage métallique.

11. Module électrique (9), utilisé pour produire de l'électricité, avec
- un film support (3) qui est de préférence pourvu d'une couche photovoltaïque (2) pour générer un courant électrique,
- une ligne de connexion (4), au moyen de laquelle le courant électrique généré peut être éloigné du film porteur (3), éventuellement de la couche photovoltaïque (2),
- un câble de raccordement (5) apte à raccorder le module électrique (9) à un réseau d'alimentation, et
- au moins un dispositif de connexion (1) selon l'une des revendications 1 à 10 pour le raccordement électrique de la ligne de connexion (4) au câble de connexion (5).

12. Module électrique (9) selon la revendication 11, **caractérisé en ce que** des ouvertures de connexion (32) pour la mise en place des premier et/ou deuxième éléments de verrouillage (111, 121) du dispositif de connexion (1) sont prévues sur le film support (3) et / ou que le module électrique (9) un second dispositif de connexion (1) selon l'une quelconque des revendications 1-10 est prévu pour la connexion électrique de la deuxième électrode du module électrique (9).

13. Procédé de connexion électrique d'un module électrique (9) selon la revendication 11 au moyen d'un dispositif de connexion (1) selon l'une des revendications 1 à 10 à un câble de connexion (5), dans lequel
a) le câble de raccordement (5) est de préférence inséré à travers un passe-câble (131) dans le premier joint (13) et dans le dispositif de raccordement (1) ou l'une des demi-coques (11, 12),
b) le câble de raccordement (5) est relié électriquement à l'unité de raccordement de conducteurs (6),
c) la ligne de raccordement (4) est reliée électriquement à l'unité de raccordement de conducteurs (6),
d) le premier joint (13) et le deuxième joint (14) sont disposés dans la première ou la deuxième partie de maintien associée (115 ; 125), de préférence chacun dans une rainure d'étanchéité (112 ; 122) prévue à cet effet,
e) la première demi-coque (11) est reliée à la deuxième demi-coque (12) au moyen des premier et deuxième éléments de verrouillage (111, 121) tel qu'une partie du film support (3) est enfermé avec un côté touchant le premier joint (13) et l'autre côté touchant le deuxième joint (14).

14. Procédé selon la revendication 13, **caractérisé en ce que** le procédé, de préférence au moins les étapes de procédé (d) et (e), peut être réalisé sans aides et/ou outils.

15. Procédé selon la revendication 13 ou 14, **caractérisé en ce que** le procédé est exécuté au moins partiellement par une machine ou un robot.
